# EUROPEAN PATENT SPECIFICATION

(11) **EP 4 313 633 B1**
(45) Date of publication and mention of the grant of the patent: **06.08.2025**
(21) Application number: 22716914.1
(22) Date of filing: 21.03.2022
(51) Int. Cl.: B60C 11/24

(54) **METHOD FOR FORECASTING THE CURRENT WEAR STATE OF AN IDENTIFIED TYRE INSTALLED ON AN IDENTIFIED AEROPLANE**
VERFAHREN ZUR VORHERSAGE DES AKTUELLEN VERSCHLEISSZUSTANDS EINES IDENTIFIZIERTEN REIFENS, DER AUF EINEM IDENTIFIZIERTEN FLUGZEUG INSTALLIERT IST
PROCÉDÉ DE PRÉVISION DE L'ÉTAT D'USURE COURANT D'UN PNEUMATIQUE IDENTIFIÉ MONTÉ SUR UN AVION IDENTIFIÉ

(30) Priority: 31.03.2021 FR 2103344
(43) Date of publication of application: 07.02.2024
(73) Proprietor: COMPAGNIE GENERALE DES ETABLISSEMENTS MICHELIN, 63000 Clermont-Ferrand (FR)
(72) Inventor: ROMERO DE LA OSA, Marc, 63040 CLERMONT-FERRAND Cedex 9 (FR); LINARES, Clement, 63040 CLERMONT-FERRAND Cedex 9 (FR); BRUNET, Julien, 63040 CLERMONT-FERRAND Cedex 9 (FR)
(74) Representative: M.F.P. Michelin
(86) International application number: PCT/EP2022/057268
(87) International publication number: WO 2022/207375

(56) References cited:
- EP-A1- 3 726 194
- EP-A1- 3 726 195
- WO-A1-2018/137920
- WO-A1-2020/205640
- WO-A1-2021/172249
- AL-GARNI A Z ET AL: "Neural network-based failure rate prediction for De Havilland Dash-8 tires", ENGINEERING APPLICATIONS OF ARTIFICIAL INTELLIGENCE, PINERIDGE PRESS, SWANSEA, GB, vol. 19, no. 6, 1 September 2006 (2006-09-01), pages 681 - 691, XP027932669, ISSN: 0952-1976, [retrieved on 20060901]

## Description

### Technical Field

The invention relates to a computer-implemented method for forecasting the current wear state of an aeroplane tyre on the basis of parameters influencing its lifetime.

### Context

The tyres installed on aeroplanes (or "aeroplane tyres" or simply "tyres") are, as is the case for other vehicles, wearing parts that are replaced when they achieve their removal thresholds (tread-pattern height below the limit of use of the tyre) or when the structure is too degraded to continue using it. The term "lifetime", such as will be used below, refers to the longevity of an aeroplane tyre, i.e. the time to when it is removed from service, having reached the wear removal threshold, or, in other words, the time for which the aeroplane tyre is able to provide the expected service, without encountering endurance problems, which would require it to be removed earlier. In the aeronautics industry, it is known to measure this lifetime by counting the number of landings that a tyre performs between when it is first installed on an aeroplane and when it is uninstalled from the aeroplane (this also being called "landings per carcass" or "landings per tread" or LPT).

There are prior-art solutions for forecasting when maintenance of tyres is required depending on their expected lifetime. For example, patent US10,295,333 discloses a method for determining the state of a tread of a tyre on the basis of images of the tread. Furthermore, patent US10,179,487 discloses a method allowing a display representative of the potential wear level of a tyre, or of the state of its tread, to be generated. This display is partially based on measurements of the depth of the tread, which measurements are acquired beforehand. However, neither of these two solutions is applicable to aeroplane tyres. They therefore do not pertain to the field of forecasting a lifetime of an aeroplane tyre in number of landings. Publication WO2020/169833 discloses a method for detecting degradation of an aeroplane tyre. In the disclosed method, the determination of the position of a central point of an actual tyre comprises a first step of defining, for each captured point, a vector normal to a surface of a first three-dimensional object that passes through the captured point. The method comprises a second step of estimating a position of the central point of the actual tyre on the basis of the normal vectors (the estimation of the position of the central point is an iterative process). The method also includes a third step during which the first three-dimensional object is matched to a theoretical tyre of known dimensions and of known orientation with a view to obtaining a second three-dimensional object, forming a matched tyre. The second three-dimensional object is converted to obtain one or more two-dimensional objects, which are analysed to detect degradation of the actual tyre.

Publication WO2019116782A1 discloses a device for measuring the remaining groove height of at least a first tyre installed on an aeroplane, and predicting the wear levels of the other tyres installed on the aeroplane, including the first tyre. Wear computations are carried out depending on many parameters, including wear energy and the internal pressure of the aeroplane tyre.

Publication WO2021172249 discloses a wear state prediction device that employs an algorithm having pre-acquired aircraft data as an explanatory variable to generate a model for predicting the wear speed of an aircraft tyre as an objective variable.

European patent application no. EP3726195 discloses a wear state prediction device that predicts the wear of an aircraft tyre on the basis of calculated wear energies and a wear resistance R indicating the relationship between a prescribed wear energy and a prescribed wear amount. The various wear energies are calculated on the basis of the internal pressure of an aircraft tyre, a load applied to the aircraft tyre, the speed of the aircraft, a slip angle produced by the aircraft tyre, and a braking force of the aircraft.

Other references discuss in general terms the employment of neural network and regression models in the failure rate prediction for aeroplane tyres (seal-Garni, Ahmed Z et al., "Neural-network-based failure rate prediction for De Havilland Dash-8 tyres", Engineering Applications of Artificial Intelligence 19 (2006) 681-691,
doi:10.1016/j.engappai.2006.01.005.

However, the wear exhibits significant performance deviations (counted in number of landings) for a given tyre model that may easily exceed 100% between the observed minimum and maximum values. At the present time, these deviations are an issue with respect to maintenance operations because they prevent airlines from applying predictive-maintenance strategies that would allow them to optimize their operations and costs. At the present time, whether or not an aeroplane tyre will have to be removed because of damage to its structure is unforecastable because this is associated with a probabilistic event (for example, harm to the tyre caused by an external object present on the runway or taxiway). This damage is often referred to as "foreign object damage" or "FOD" and occurs when the aircraft passes over a runway or taxiway littered with rigid objects (the terms "aeroplane" and "aircraft" are used interchangeably). The objects that cause FOD comprise any type of object that is able to damage tyres (including, nonlimitingly, loose bits of metal, fragments of pavement, catering supplies, building materials, rocks, sand, items of luggage and wild animals). These objects are found at terminal gates, on runways and taxiways and on other surfaces over which aircraft move on the ground.

The current inability to forecast the moment of removal of a tyre at the end of its wear life (when the remaining tread-pattern height will become lower than or equal to 1.2 mm ± 0.2 mm) places on customers burdensome constraints in terms of inspection, of management of maintenance teams and of management of stocks of tyres, of brakes and of wheels, with the associated economic consequences. In addition, since aeroplane tyres are the component with the shortest lifetime of the tyre-brake-wheel-landing gear assembly, the entire maintenance chain of the tyre-brake-wheel-landing gear system of the aeroplane (for example, a system such as the ATA32) is dependent thereon.

On the basis of a physical model, it would in theory be possible to estimate the remaining tread-pattern height of an aeroplane tyre and to deduce therefrom, subsequently, a lifetime remaining for this tyre (either in number of landings or in remaining tread-pattern height). However, this model would require many physical parameters (including, nonlimitingly, the temperature of the tread, the load on the tyre, its pressure, its speed, etc.) in order to be accurate enough. The aforementioned physical parameters are difficult to obtain without placing many sensors in the tyre.

The recent improvement in machine-learning and data-analysis techniques, combined with platforms for computing and storing data, has opened the way to development of new predictive approaches to managing aeroplane tyres that overcome the drawbacks of the prior art. In the field of artificial intelligence, machine-learning techniques are known, and their essence is to be "trained" on a high number of situations. By virtue of adjustment of weighting coefficients in a training phase, machine learning may predict the result of a new situation presented thereto. It will be noted that a plurality of different machine-learning methods are possible, including supervised learning (in which the algorithm is trained on a set of labelled data and learns until it is capable of obtaining the desired result), unsupervised or semi-supervised learning (in which the data are not labelled so that the network may learn so as to increase the accuracy of the algorithm), reinforcement learning (in which the algorithm is rewarded for positive results and punished for negative results) and active learning (as it learns, the algorithm requests examples and labels to refine its prediction) (see https://www.lebigdata.fr/reseau-de-neurones-artificiels-definition).

It would therefore be advantageous to explore the relationship between the use of aeroplane tyres (i.e. parameters influencing the lifetime of an aeroplane tyre) and the lifetime performance of tyres. This performance knowledge comprises a comprehension of wear profiles observed as a result of parameters of the use of the aeroplane.

Thus, the disclosed invention relates to a method for forecasting the remaining lifetime of an aeroplane tyre, wherein the remaining lifetime is estimated indirectly via the wear state of the tyre. This remaining lifetime corresponds to a potential residual wear, which serves as a predictive-maintenance tool allowing all the activities that are associated with the maintenance schedule of the aeroplane tyres to be better scheduled.

### Summary of the invention

The invention relates to a computer-implemented forecasting method for forecasting a number of residual as defined in the appended independent claim 1.

In certain embodiments of the method, the influencing parameters comprise:
- historic information comprising data corresponding to the historic flights of the identified aeroplane having the identified tyre installed thereon; and
- general information comprising data corresponding to the identified tyre, including its position of installation on the identified aeroplane.

In certain embodiments of the method, the maintenance schedule created by the system during the comparing step comprises:
- a plan to service the identified tyre when the number of residual landings output by the forecasting model is higher than the removal-threshold value defined for the identified tyre;
   and
- a plan to inspect the identified tyre when the number of residual landings output by the forecasting model is equal to or lower than the removal-threshold value defined for the identified tyre.

In certain embodiments of the method, the method further comprises a supervised-learning method that receives as input the obtained influencing parameters and the data of the training database so that the processor may acquire known wear states corresponding to the number of landings carried out by the identified tyre to construct the forecasting model.

In certain embodiments of the method, the supervised-learning method comprises a supervised-learning method of GBR (gradient boosting regressor) type.

In certain embodiments of the method, the training database includes images of wear profiles corresponding to known wear states and corresponding numbers of landings carried out by the identified tyre.

In certain embodiments of the method, during the forecasting step, the number of residual landings of the identified tyres is computed on the basis of data corresponding to the influencing parameters of future landings.

In certain embodiments of the method, the simulating step is repeated a plurality of times via a Monte-Carlo loop with a view to forecasting an end-of-life of the identified tyre.

Further aspects of the invention will become obvious from the following detailed description.

### Brief description of the drawings

The nature and various advantages of the invention will become more obvious from reading the following detailed description, in conjunction with the attached drawings, throughout which the same reference numerals denote parts that are identical, and in which:
**[****Fig 1] [Fig 2]** Figures 1 and 2 are schematic representations of an aeroplane tyre.
**[****Fig 3]** Figure 3 shows a schematic view of embodiments of the forecasting method of the invention.
**[****Fig 4]** Figure 4 shows a schematic view of a system that carries out the forecasting method of the invention.
**[****Fig 5]** Figure 5 shows a flowchart of one embodiment of the forecasting method of the invention.

### Detailed description

The solution proposed by the invention aims to estimate a lifetime of an aeroplane tyre without adding new sensors and solely using historic information (comprising, for example, data corresponding to dates of departure, dates of arrival, airports visited and climatic data) of flights that the tyre in question has made and general information on this tyre (comprising, for example, data corresponding to its retread level, its position of installation on the aeroplane, the theoretical average number of landings possible in this position and the performance of similar tyres excluding removal as a result of FOD). These data, which describe a large part of the use of a tyre, will be used in a machine-learning model in order to forecast the current wear state of the tyre on the basis of parameters influencing its lifetime.

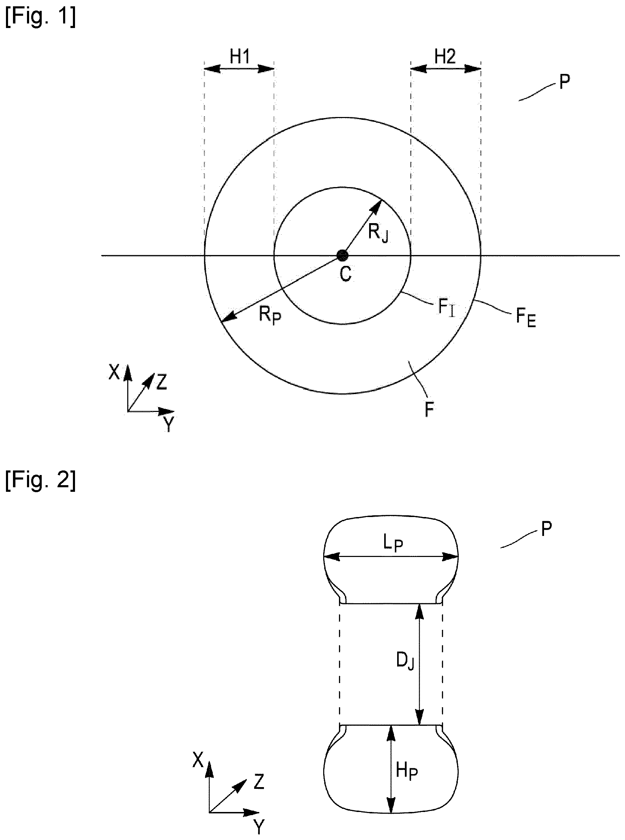

Regarding the characteristics of an aeroplane tyre concerned by the invention, its geometry must be taken into account. Figures 1 and 2 contain schematic depictions of a tyre P which, in the conventional way, comprises two circumferential beads intended to anchor the tyre on a rim. Each bead comprises an annular reinforcing bead wire. The makeup of a tyre is typically described by a representation of its constituent components in a meridian plane, that is to say a plane containing the axis of rotation of the tyre. The radial, axial and circumferential directions denote the directions perpendicular to the axis of rotation of the tyre, parallel to the axis of rotation of the tyre, and perpendicular to any meridian plane, respectively. The expressions "radially", "axially" and "circumferentially" mean "in a radial direction", "in the axial direction" and "in a circumferential direction" of the tyre, respectively. The expressions "radially interior" and "respectively radially exterior" mean "closer to, respectively further away from, the axis of rotation of the tyre, in a radial direction".

With reference to Figure 1, the tyre P comprises an internal limit F_{I} and an external limit F_{E} which together define the limits of a sidewall F of the tyre P. The internal limit F_{I} separates the sidewall F of the tyre from a rim (not depicted) on which the tyre is intended to be mounted. The tyre P also has a rim radius R_{J} defined as being the distance between a central point C of the tyre and the internal limit F_{I} which separates the rim and the sidewall F of the tyre. The tyre P also has a sidewall internal diameter defined as being twice the rim radius R_{J}. The tyre P also has a tyre radius R_{P} defined as being the distance between the central point C and an external limit F_{E} of the sidewall F which represents the tread surface of the tyre. The tyre P also has a tyre diameter defined as being twice the tyre radius R_{P}.

With reference to Figure 2, the tyre P inflated and unladen has several parameters pertaining to its geometry, including a nominal section width L_{P} and a height H_{P} (the height H_{P} often being expressed as a percentage of the width L_{P}). The tyre P also has a measurement D_{J} which represents the diameter of a rim on which the tyre is intended to be installed (this measurement being substantially equal to the sidewall internal diameter F_{I}). It must be appreciated that each of these parameters may be expressed in equivalent known length measurements (for example in millimetres (mm) or in inches (in)).

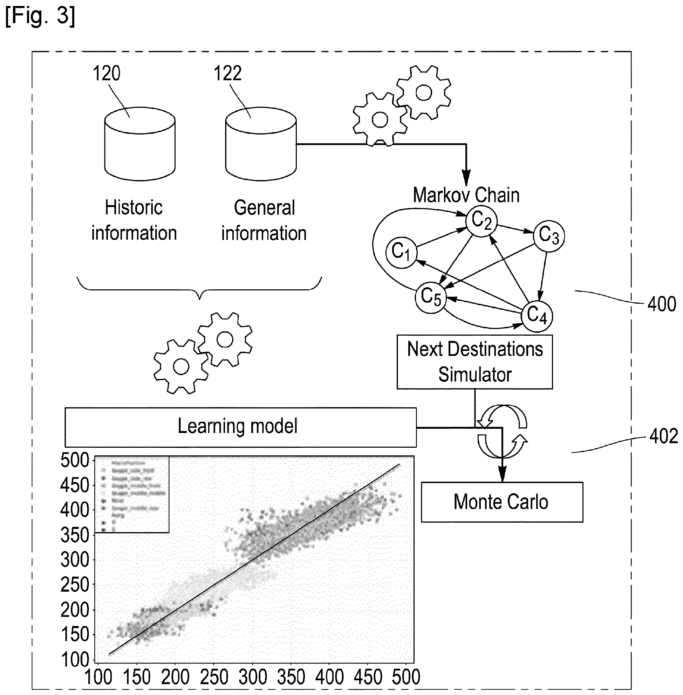

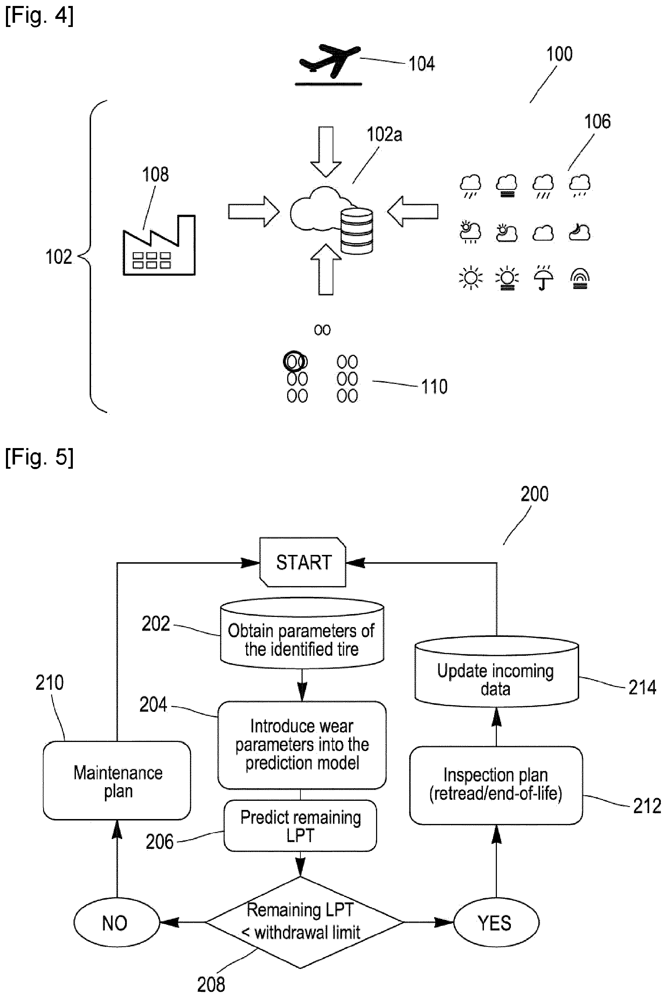

With reference now to Figures 3 and 4, in which the same numbers identify identical elements, Figure 3 shows a schematic view of embodiments of the method for forecasting a number of residual landings corresponding to achievement of a removal threshold of an identified tyre (or "forecasting method" or "method"). The forecasting method of the invention is based on the wear state of an identified tyre, being defined by way of a forecast wear profile, by a remaining groove height (the groove comprising a tread-pattern element allowing water to be removed in order to allow contact and adherence with the runway or taxiway) or via another means for predicting the potential useful tread remaining. It will be noted that a wear state is represented by a value or set of values representative of the difference between the new state (represented by a tyre having never been installed on an aeroplane) and the worn state (represented by a tyre removed from use because the removal threshold has been achieved through wear). The wear state may take the form of a unitary value such as minimum groove height, of a set of values defining the height of the tread in a meridian plane of the tyre (for example, a 2D profile) or of a set of values defining the height of the tread on all or part of the external surface of the tyre (for example, a 3D profile).

As used here, the "remaining lifetime" of an identified tyre refers to its potential residual wear as a function of the values of the parameters influencing its longevity. The remaining lifetime may be determined continuously or at regular, predefined or sporadic intervals by collecting data corresponding to the parameters influencing the lifetime of the identified tyre. On the basis of the collected data, the method of the invention may define a current wear state of the tyre with a view to determining the remaining lifetime of the identified tyre, which lifetime is computed in number of landings accessible.

Figure 4 shows a system 100 that carries out the forecasting method of the invention. The system comprises a communication network 102 that manages the data input into the system 100 from various sources. The communication network 102 incorporates one or more communication servers (or "servers") 102a that manage the data corresponding to the historic information and to the general information regarding an identified tyre. The term "identified tyre" (in the singular or the plural) is used here to refer to a tyre present in the physical environment of the system 100 and which is installed on an identified aeroplane (being a tyre still in service on the identified aeroplane). The identified tyre may comprise one or more known sensors for generating or capturing data, such as data corresponding to an operational environment of the identified aeroplane or one portion thereof. The sensors may include a set of sensors for delivering data regarding characteristics of operation of the identified tyre. The sensors may include, for example, one or more speed sensors, one or more acceleration sensors, one or more sensors related to traction, one or more sensors related to braking, and/or a combination of sensors for collecting data regarding one or more aspects of the dynamic situation of the identified tyre. The sensors may also deliver stored data regarding the identification of the identified tyre (including, nonlimitingly, its provenance as regards production, distribution and/or storage, it date of production, its retreading history if applicable and its position and its installation history).

The term "historic information" (in the singular or plural) is used here to refer to data corresponding to the historic flights of the identified aeroplane having the identified tyre installed. These data may comprise, nonlimitingly, data corresponding to the dates of departure and/or arrival of the identified aeroplane, the airports visited by the identified aeroplane (these data being capable of being collected from various sources, including the data of historic flights attributed to an airline 104 to which the identified aeroplane belongs), data on the aeroplane (including, nonlimitingly, the manufacturer, the version of the aeroplane model, its identification code, etc.) and meteorological and/or climatic conditions 106 during the historic flights.

The term "general information" (in the singular or plural) is used here to refer to data corresponding to the identified tyre. These data may comprise, nonlimitingly, its size (which may be represented by the type of tyre and/or its nomenclature), its construction code (for example, "-" for bias-ply and "R" for radial), its provenance as regards production 108 (for example, the name and/or trademark of the producer of the identified tyre, its date of manufacture and its site of manufacture, distribution and/or storage), its serial number, its load rating, its speed rating, its expected landings per tread or LPT and/or its unique identification code. By way of example, for a tyre of a size 52x21.0R22, the number "52" represents the diameter of the tyre in inches, the number "21.0" represents the cross-sectional width at the widest point of an inflated new tyre, the letter "R" represents a radial tyre, and the number "22" represents the diameter of the rim in inches.

The general information may also comprise the installation position 110 (including the installation history) of the identified tyre. It will be noted that the installation position shown in Figure 4 is given by way of example.

The general information may also comprise the retreading level (if applicable) of the identified tyre. The term "retreading" is used here to refer to the method used to return a worn tyre to a state fit for operation by renewing the rubber of the tread and the one or more plies. During the retreading process, old tread products are removed and replaced by new materials. Retreading is a method that is known and regulated in the aerospace industry. Data corresponding to the retreading level of an identified tyre are managed by the airline 104 and/or by the producer (represented by the number 108).

In one embodiment of the invention, the historic information and/or the general information may be generated and/or managed, at least in part, by one or more airports (or by one or more networks of airports including the specific airport). In this embodiment, the system 100 aims to simulate destination airports of the identified aeroplane on the basis of the historic information. It will be noted that airlines 104 manage their aeroplanes differently, and their modes of management are therefore capable of modification. Thus, in this embodiment, the general information may also be used to specify the relationship between the historic information and the properties of the identified tyre by performing a personalized simulation with respect to the destination airports.

The communication network 102 of the system 100 comprises one or more communication devices (not shown) that capture and transmit the collected data to the server 102a. The one or more communication devices comprise one or more portable devices such as a mobile network device (for example, a mobile telephone, a laptop computer, one or more portable devices connected to the network, including "augmented reality" and/or "virtual reality" devices, and/or any combinations and/or any equivalents). In all cases, the communication devices may comprise clothes and/or wearables connected to the network, and worn by one or more operators (where each operator is a human or a known apparatus such as a robot). By way of example, a monitoring device worn by an airline pilot may monitor via video the conditions of a flight and send the corresponding data (being the historic information of the identified tyre) to the server 102a of the communication network 102.

The one or more communication devices may also comprise one or more remote computers able to transfer data via the communication network 102. By way of example, a portable device of the system 100 may transmit the historic information and/or the general information of the identified tyre to a remote computer of the system 100. On the basis of the transmitted data, the remote computer may transmit to the portable device a statement regarding maintenance of the identified tyre, indicating a plan regarding expected undertakings (for example, advice to remove from service the identified tyre because a forecasting model of the invention indicates that its tread depth is too low).

The communication network 102 may include wired or wireless links and may employ any data-transfer protocol known to those skilled in the art. Examples of wireless links may include, nonlimitingly, radiofrequency (RF) links, satellite links, (analogue or digital) cell or mobile telephone links, Bluetooth^{®} links, Wi-Fi links, infrared links, ZigBee links, local-area-network (LAN) links, wireless-local-area-network (WLAN) links, wide-area-network (WAN) links, near-field-communication (NFC) links, links according to other wireless-communication standards and configurations, their equivalents, and a combination of these elements.

It will be understood that the communication network 102a implies the use of one or more processors as will be understood by anyone skilled in the art. The term "processor" (or, alternatively, the term "programmable logic circuit") (in the singular or in the plural) refers to one or more devices capable of processing and analysing data and comprising one or more software packages for processing same (for example one or more integrated circuits known by those skilled in the art as being included in a computer, one or more controllers, one or more microcontrollers, one or more microcomputers, one or more programmable logic controllers (or PLCs), one or more application-specific integrated circuits, one or more machine-learning algorithms and/or one or more other known equivalent programmable circuits).

The invention therefore capitalizes upon methods and tools based on artificial intelligence (or "AI") to complete partial information that is delivered (on the basis of the historic information and general information received). An analysis of the machine learning is carried out using a machine-learning model such as an artificial neural network comprising a plurality of layers. The machine-learning analysis receives as input processed data from the communication network 102, i.e. the historic information and the general information of the identified tyre. In the embodiments, data are received by way of inputs into various layers of the machine-learning model. The algorithm allows continuous improvement across all of the aeroplane tyres, ensuring self-improvement of the system 100 from the experience it acquires, particularly as regards the choice between a plan to service and a plan to inspect the identified tyre.

With reference once again to Figures 3 and 4, and furthermore to Figure 5, embodiments of a method for forecasting wear state of the invention will now be disclosed. In each embodiment, the forecasting method is implemented by computer so that the system 100 may construct a model for forecasting wear state for the identified tyre (or "forecasting model") (either in terms of number of landings or in terms of the wear state of the aeroplane tyre). With reference to Figure 5, this figure shows one embodiment of the forecasting method of the invention 200, in which embodiment the forecasting model may predict a number of residual landings of the identified tyre with a view to determining its remaining lifetime. The remaining lifetime of the identified tyre comprises a number of landings (or landings per tread or LPT) of the identified aeroplane corresponding to a forecast wear state of the identified tyre. In this embodiment, the method therefore concerns construction of a model for forecasting the number of residual landings of the identified tyre with a view to determining a maintenance schedule. The maintenance schedule of the identified tyre comprises a choice between a service plan (in which the identified tyre remains installed on the identified aircraft) and an inspection plan (in which the identified tyre is inspected with a view to ensuring that it is removed at the right time, either for carrying out retreading thereof or for introducing it into the end-of-life circuit, the latter comprising recycling).

On starting the forecasting method 200 shown in Figure 5, the forecasting model is constructed on the basis of one or more parameters influencing the wear of the identified tyre. To construct the forecasting model, the method comprises a step 202 of introducing influencing parameters of the identified tyre, this step being carried out by the system 100. During this step, influencing parameters of the identified tyre are obtained by the communication devices of the system 100. The obtained influencing parameters comprise data corresponding to the historic information and to the general information of the identified tyre. These data are stored (for example, in one or more databases 120, 122 of the system 100) (see Figure 3), and they are updated throughout the forecasting method on a continuous basis or on an intermittent basis.

The introducing step comprises a step of creating a training database (or "database") of the wear states, which is introduced into the forecasting model. The created training database may comprise a reference database of the aeroplane tyres that are intended to be installed on the identified aeroplane. The database may comprise an already created reference (for example, a table of remaining lifetimes of the aeroplane tyres at a plurality of wear thresholds). The database may include parameters corresponding to a plurality of commercially available tyres (including parameters that form part of the general information discussed above). The specific source of the wear states of a plurality of wear levels is not essential to the method described here, which would function equally well using data obtained exclusively from tyres having reached their wear threshold. By way of example, a system may implement the method of the invention using data obtained from measurements performed on tyres received by a factory after deinstallation of the installed assembly.

This system implements the method of the invention to assist an airline with transmission of information on the progress of wear of the tread of an identified tyre to personnel of an airport served by the airline, perhaps during an inspection of the aeroplane. This system implements the method of the invention using data from measurement of the wear threshold of the "stocked" tread to prepare personalized reminders to be sent to an operator of the aeroplane (i.e. the airline or an airport served by the airline) to forecast servicing of the identified tyres. The created database may include images of wear profiles corresponding to known wear states and the corresponding number of landings carried out. The wear profile of an identified tyre is defined by the outline of the external surface of its tread during use. Thus, a new tread having not yet been employed is considered to be an envelope worn to 0%, and a tread that meets the manufacturer's advisory conditions for removal is considered to be an envelope worn to 100%. The profile described here may consist of one or more (3D) surface measurements (carried out beforehand) that reproduce all or some of the external surface of a tread. Furthermore, the profile described here may consist of one or more (2D) linear measurements (carried out beforehand) in one or more planes that contain the axis of symmetry of the tread. The training database therefore comprises expected images (and data therefore) corresponding to (3D, 2D, 1D) profiles of worn tyres, and the landings of the aeroplane.

The forecasting method of the invention 200, which method is shown in Figure 5, further comprises a step 204 of training the forecasting model to predict the number of residual landings corresponding to achievement of the removal threshold of the identified tyre. As used here, the "removal threshold" of an identified tyre refers to a regulatory minimum depth (or another threshold defined by the user) at which it must be replaced. During this step, a machine-learning method receives as input the obtained influencing parameters (being the historic information and the general information of the identified tyre) and the data of the created training database. After the system 100 has obtained the historic information and general information corresponding to the identified tyre, the processor may collect known wear states corresponding to the number of landings carried out by the identified tyre with a view to constructing the forecasting model.

In one embodiment, the machine-learning method employed during the training step 204 comprises a supervised-learning method. The supervised-learning method may comprise one or more neural networks (for example, autoencoders, ANNs, CNNs, RNNs, perceptrons, long short-term memory (LSTM), Hopfield networks, Boltzmann machines, deep belief networks, deconvolutional neural networks, generative adversarial networks (GANs), etc.) and their complements and equivalents. The one or more CNNs may be trained with ground-truth data that are generated using data representative of the influencing parameters (for example, the data incorporated into the training database described above).

In one embodiment in which the training step 204 comprises a supervised-learning method, this step comprises a supervised-learning method of GBR (gradient boosting regressor) type. The GBR learning method receives as input data corresponding to the historic information and general information of the identified tyre (including, nonlimitingly, the position of the identified tyre on the identified aeroplane, the retreading level of this identified tyre and the proportion of landings in each of the airports visited by this identified tyre). The GBR learning method aims to predict the number of residual landings (remaining LPT) corresponding to achievement of the removal threshold of the identified tyre. Thus, the output to be predicted of the forecasting model will be the forecast of the wear state of the identified tyre (characterized, for example, by a date range in which the removal threshold of the identified tyre will be reached). This for example allows tyres with an excessively pronounced wear state (i.e. a wear state beyond a predetermined wear threshold that ensures correct operation of the tyre) to be removed preventively. By way of example, in certain use cases, the rate of wear of the shoulder of the identified tyre induces appearance of working plies before the skid limit is reached. Providing a wear profile of a worn aeroplane tyre allows immediate and unforecast removals to be avoided.

The forecasting method 200 of the invention further comprises a step 206 of forecasting the number of residual landings (or "remaining LPT") before achievement of the removal threshold of the identified tyre. The number of residual landings of the identified tyres may be computed on the basis of data corresponding to the influencing parameters of future landings. It will be noted that the future-landing data may be hypothetical or real depending on the type of management applied by an airline to its fleet of aeroplanes and its ability to determine, within a given timeframe, the routes to which an aeroplane will be assigned. An offset between the true wear states and the number of forecast landings is denoted by a computed error, such an error indicating a variation in the tread of the identified tyre. The computed errors may be input into the training database (described above) to improve the predictive capacity of the forecasting model.

The forecasting method 200 further comprises a comparing step 208 during which the remaining LPT before achievement of the removal threshold of the identified tyre, which is output by the forecasting model, is compared to a value of the removal threshold. This removal threshold is defined by the user (for example, an airline) and/or by the manufacturer of the identified tyre with a view to organizing maintenance operations.

During the comparing step, the system 100 indicates a plan 210 to service the identified tyre if the number of residual landings output by the forecasting model is higher than the removal-threshold value defined for the identified tyre. Similarly, the system 100 indicates a plan 212 to inspect the identified tyre if the number of residual landings output by the forecasting model is equal to or lower than this removal-threshold value. In the case where the tread of the identified tyre has reached or is close to reaching the wear removal threshold, the system 100 takes into account the wear states of worn tyres obtained from measurements of wear states performed on aeroplane tyres received by a factory after use. In the case where the identified tyre must be replaced by another tyre of the same type, the forecasting model is updated during the replacement of the worn tyre by an identified tyre having a tread considered new (see the number 214 of Figure 5). It will be noted that the replacement of the identified tyre may comprise either retreading or recycling (or another end-of-life treatment) of the identified tyre.

With reference again to Figure 3, in all the embodiments of the forecasting method of the invention, the method may further comprise an optional simulating step 400 that aims to simulate destination airports of the identified aeroplane. In these embodiments, this simulation aims to simulate destination airports of a given aeroplane on the basis of historic data of flights of the airline to which this aeroplane belongs. This simulation is performed by way of a Markov chain in which each state represents one airport and each inter-airport link represents the probability of landing in one airport starting from another. These probabilities are estimated on the basis of historic information with a view to carrying out random scheduling given that the airline is ignorant of the future uses of its aircraft. The use of a Markov chain allows key characteristics of the data to be learnt with a view to developing and to evaluating a corresponding uncertainty model.

In embodiments of the method of the invention aiming to simulate destination airports of the identified aeroplane, the simulation of a number of destinations allows the proportion of landings of the identified tyre at each of a plurality of airports identified in the simulation to be computed (therefore, using "real" and simulated data). This step 400 of simulating destination with a view to completing the life of the identified tyre is repeated a plurality of times via a Monte-Carlo loop (see number 402 of Figure 3). Each simulation is, subsequently, the subject of a prediction via a model as described above, in order to finally obtain, for the identified tyre, a forecast number-of-landings distribution.

### EXAMPLE:

* An identified tyre installed in position *P* on an identified aeroplane has *Z* LPT at a time *t*. Knowledge of the distribution of the LPT in position *P* is gained via the historic information.
* Considering a random draw of possible trajectories, for each random draw of theoretical LPT, LPT_th*ₜ*, a simulated trajectory will comprise LPT_th*ₜ* - *Z* destinations.
* By computing a percentage of frequentation on a complete trajectory of the lifetime of the identified tyre, a forecasting model for each complete trajectory is applied in order to obtain a distribution of the total number of LPT able to be carried out by the identified tyre.

In the hypothetical case where the airline employs more scheduled management and knows the destinations of its aircraft a few weeks in advance, it could replace the simulation with introduction of true destinations (or even choose to employ an intermediate semi-deterministic management if it does not exactly know how its aircraft will be used but is able to define relatively probable destinations). Before implementing the Markov chain to recognize the long-term time-dependent models of the forecasting process, which reveal the behaviours of the relevant characteristics necessary to the uncertainty model, it is essential to study and understand the nature of the dataset (historic information and general information) that will be used to evaluate the models.

In all the embodiments of the forecasting method of the invention, one or more steps may be carried out iteratively.

Although the embodiments of the forecasting method of the invention are described here in the context of use of neural networks by way of machine-learning model, other types of machine-learning models may be used. The latter include, nonlimitingly, models using linear regression, logistic regression, decision trees, support vector machines, naive Bayes methods, k-nearest neighbour (k-NN) algorithms, k indicating a group, random forests, algorithms for reducing dimensionality, and gradient descent.

The invention therefore predicts a longevity (and therefore forecasts the maintenance schedule) of an aeroplane tyre using easily accessible data, allowing a reliable forecasting model to be created. Even though human specialists exhibit flexibility when making decisions regarding the plan to service or the plan to inspect an aeroplane tyre, they are not capable of analysing the large amounts of data required to make real-time decisions with a view to determining whether the identified aeroplane must be serviced. Personnel are incapable of analysing the large amounts of data required to make this decision. To this end, it is necessary to adopt an approach for amending airline operations that uses data on the various empirical rules employed by human specialists, in order to forecast maintenance statements.

The system 100 may include preprogrammed management information. For example, a forecasting-method adjustment may be associated with the parameters of the typical physical environments in which the system 100 functions (for example, the parameters of the visited airports). In some embodiments, the system 100 (and/or an installation incorporating the system 100) may receive voice commands or other audio data representing, for example, start or stoppage of capture of the data corresponding to the historic information and/or general information of the identified tyres, or start or stoppage of movement of the communication device. A request made to the system 100 may include a request for the current state of an automatic-forecasting-method cycle. A generated response may be represented audibly, visually, in a tactile manner (for example by way of a haptic interface) and/or in a virtual and/or augmented manner. This response, together with the corresponding data, may be recorded in a neural network.

## Claims

1. Computer-implemented forecasting method (200) for forecasting a number of residual landings (remaining LPT) corresponding to achievement of a removal threshold of an identified tyre that is installed on an identified aeroplane, the forecasting method comprising the following steps:
- a step (202) of introducing parameters influencing the identified tyre into a system (100) that carries out the forecasting method, the system (100) comprising a communication network (102) that manages data input into the system, the communication network having one or more communication servers (102a) that manage data corresponding to the parameters influencing the identified tyre, and having at least one communication device that captures and that transmits these data to the servers, this step comprising the following steps:
- a step of obtaining parameters influencing the identified tyre, which step is carried out by the communication devices of the system (100), and in which step the obtained influencing parameters comprise data corresponding to historic information and to general information of the identified tyre; and
- a step of creating a wear-state training database, which is introduced into a model for forecasting the number of residual landings corresponding to achievement of the removal threshold of the identified tyre;
- a step (204) of training the forecasting model to predict the number of residual landings corresponding to achievement of the removal threshold of the identified tyre, during which step a machine-learning method receives as input the obtained influencing parameters and the data of the training database so that the processor may acquire known wear states corresponding to the number of landings carried out by the identified tyre;
- a step (206) of forecasting the number of residual landings (remaining LPT) before achievement of the removal threshold of the identified tyre, during which step the number of residual landings of the identified tyres is computed on the basis of data corresponding to the influencing parameters; and
- a comparing step (208) during which the number of residual landings (remaining LPT) before achievement of the removal threshold of the identified tyre, which is output by the forecasting model, is compared with a value of the removal threshold of the identified tyre, and as a consequence the system (100) creates a maintenance schedule for the identified tyre, **characterized in that** the forecasting method further comprises a step (400) of simulating destination airports of the identified aeroplane on the basis of historic flight data, wherein the simulating step (400) is performed by way of a Markov chain in which each state represents one airport and each inter-airport link represents a probability of landing in one airport starting from another.

2. Forecasting method (200) according to Claim 1, wherein the influencing parameters comprise:
- historic information comprising data corresponding to historic flights of the identified aeroplane having the identified tyre installed thereon; and
- general information comprising data corresponding to the identified tyre, including its position of installation on the identified aeroplane.

3. Forecasting method (200) according to Claim 1 or Claim 2, wherein the maintenance schedule created by the system (100) during the comparing step (208) comprises:
- a plan to service the identified tyre when the number of residual landings (remaining LPT) output by the forecasting model is higher than the removal-threshold value defined for the identified tyre; and
- a plan to inspect the identified tyre when the number of residual landings (remaining LPT) output by the forecasting model is equal to or lower than the removal-threshold value defined for the identified tyre.

4. Forecasting method (200) according to any one of Claims 1 to 3, wherein a supervised-learning method receives as input the obtained influencing parameters and the data of the training database so that the processor may acquire known wear states corresponding to the number of landings carried out by the identified tyre to construct the forecasting model.

5. Forecasting method (200) according to Claim 4, wherein the supervised-learning method comprises a supervised-learning method of GBR (gradient boosting regressor) type.

6. Forecasting method (200) according to Claim 4 or Claim 5, wherein the training database includes images of wear profiles corresponding to known wear states and corresponding numbers of landings carried out by the identified tyre.

7. Forecasting method (200) according to any one of Claims 1 to 6, wherein, during the forecasting step (206), the number of residual landings (remaining LPT) of the identified tyres is computed on the basis of data corresponding to the influencing parameters of future landings.

8. Forecasting method (200) according to any one of Claims 1 to 7, wherein the simulating step (400) is repeated a plurality of times via a Monte-Carlo loop (402) with a view to forecasting an end-of-life of the identified tyre.

## Patentansprüche

1. Computer-implementiertes Vorhersageverfahren (200) zur Vorhersage einer Anzahl von restlichen Landungen (verbleibenden "Landings per tread", LPT), die dem Erreichen eines Demontageschwellenwertes eines identifizierten Reifens, der an einem identifizierten Flugzeug montiert ist, entspricht, wobei das Vorhersageverfahren die folgenden Schritte umfasst:
- einen Schritt (202) der Einführung von Parametern, die den identifizierten Reifen beeinflussen, in ein System (100), welches das Vorhersageverfahren ausführt, wobei das System (100) ein Kommunikationsnetz (102) umfasst, das die Dateneingabe in das System verwaltet, wobei das Kommunikationsnetz einen oder mehrere Kommunikationsserver (102a) aufweist, die Daten verwalten, die den Parametern entsprechen, die den identifizierten Reifen beeinflussen, und mindestens eine Kommunikationsvorrichtung aufweist, die diese Daten erfasst und die sie an die Server sendet, wobei dieser Schritt die folgenden Schritte umfasst:
- einen Schritt der Gewinnung von Parametern, die den identifizierten Reifen beeinflussen, wobei dieser Schritt von den Kommunikationsvorrichtungen des Systems (100) ausgeführt wird und wobei in diesem Schritt die gewonnenen Einflussparameter Daten umfassen, die historischen Informationen und allgemeinen Informationen des identifizierten Reifens entsprechen; und
- einen Schritt der Erzeugung einer Verschleißzustands-Trainingsdatenbank, welche in ein Modell zur Vorhersage der Anzahl von restlichen Landungen, die dem Erreichen des Demontageschwellenwertes des identifizierten Reifens entspricht, eingeführt wird;
- einen Schritt (204) des Trainierens des Vorhersagemodells, um die Anzahl von restlichen Landungen vorherzusagen, die dem Erreichen des Demontageschwellenwertes des identifizierten Reifens entspricht, wobei während dieses Schrittes ein maschinelles Lernverfahren als Eingang die gewonnenen Einflussparameter und die Daten der Trainingsdatenbank empfängt, so dass der Prozessor bekannte Verschleißzustände erfassen kann, die der Anzahl von Landungen entsprechen, die von dem identifizierten Reifen durchgeführt wurden;
- einen Schritt (206) der Vorhersage der Anzahl von restlichen Landungen (verbleibenden LPT) vor dem Erreichen des Demontageschwellenwertes des identifizierten Reifens, wobei in diesem Schritt die Anzahl der restlichen Landungen der identifizierten Reifen auf der Basis von Daten berechnet wird, die den Einflussparametern entsprechen; und
- einen Vergleichsschritt (208), in dem die Anzahl von restlichen Landungen (verbleibenden LPT) vor dem Erreichen des Demontageschwellenwertes des identifizierten Reifens, welche von dem Vorhersagemodell ausgegeben wird, mit einem Wert des Demontageschwellenwertes des identifizierten Reifens verglichen wird, und als Folge davon das System (100) einen Wartungsplan für den identifizierten Reifen erzeugt, **dadurch gekennzeichnet, dass** das Vorhersageverfahren ferner einen Schritt (400) der Simulation von Zielflughäfen des identifizierten Flugzeugs auf der Basis historischer Flugdaten umfasst, wobei der Simulationsschritt (400) mittels einer Markow-Kette durchgeführt wird, in welcher jeder Zustand einen Flughafen darstellt und jede Verbindung zwischen Flughäfen eine Wahrscheinlichkeit der Landung auf einem Flughafen, wenn von einem anderen gestartet wurde, darstellt.

2. Vorhersageverfahren (200) nach Anspruch 1, wobei die Einflussparameter umfassen:
- historische Informationen, welche Daten umfassen, die historischen Flügen des identifizierten Flugzeugs mit dem an ihm montierten identifizierten Reifen entsprechen; und
- allgemeine Informationen, welche Daten umfassen, die dem identifizierten Reifen entsprechen, einschließlich seiner Montageposition an dem identifizierten Flugzeug.

3. Vorhersageverfahren (200) nach Anspruch 1 oder Anspruch 2, wobei der Wartungsplan, der von dem System (100) im Vergleichsschritt (208) erzeugt wird, umfasst:
- einen Plan zum Warten des identifizierten Reifens, wenn die Anzahl von restlichen Landungen (verbleibenden LPT), die von dem Vorhersagemodell ausgegeben wird, größer als der Demontageschwellenwert ist, der für den identifizierten Reifen definiert ist; und
- einen Plan zum Inspizieren des identifizierten Reifens, wenn die Anzahl von restlichen Landungen (verbleibenden LPT), die von dem Vorhersagemodell ausgegeben wird, gleich dem oder kleiner als der Demontageschwellenwert ist, der für den identifizierten Reifen definiert ist.

4. Vorhersageverfahren (200) nach einem der Ansprüche 1 bis 3, wobei ein überwachtes Lernverfahren als Eingang die gewonnenen Einflussparameter und die Daten der Trainingsdatenbank empfängt, so dass der Prozessor bekannte Verschleißzustände erfassen kann, die der Anzahl von Landungen entsprechen, die von dem identifizierten Reifen durchgeführt wurden, um das Vorhersagemodell zu erstellen.

5. Vorhersageverfahren (200) nach Anspruch 4, wobei das überwachtes Lernverfahren ein überwachtes Lernverfahren vom Typ GBR (Gradient Boosting Regressor) umfasst.

6. Vorhersageverfahren (200) nach Anspruch 4 oder Anspruch 5, wobei die Trainingsdatenbank Bilder von Verschleißprofilen, die bekannten Verschleißzuständen entsprechen, und entsprechende Anzahlen von Landungen, die von dem identifizierten Reifen durchgeführt wurden, enthält.

7. Vorhersageverfahren (200) nach einem der Ansprüche 1 bis 6, wobei im Vorhersageschritt (206) die Anzahl der restlichen Landungen (verbleibenden LPT) der identifizierten Reifen auf der Basis von Daten berechnet wird, die den Einflussparametern zukünftiger Landungen entsprechen.

8. Vorhersageverfahren (200) nach einem der Ansprüche 1 bis 7, wobei der Simulationsschritt (400) mehrere Male über eine Monte-Carlo-Schleife (402) mit dem Ziel einer Vorhersage eines Lebensdauerendes des identifizierten Reifens wiederholt wird.

## Revendications

1. Procédé de prévision (200) mis en œuvre par ordinateur pour prévoir un nombre d'atterrissages résiduels (LPT restant) correspondant à l'atteinte d'un seuil de retrait d'un pneumatique identifié qui est monté sur un avion identifié, le procédé de prévision comprenant les étapes suivantes :
- une étape d'introduction (202) des paramètres influents du pneumatique identifié à un système (100) qui réalise le procédé de prévision, le système (100) comprenant un réseau de communication (102) qui gère des données entrantes au système, le réseau de communication ayant un ou des serveurs de communication (102a) qui gèrent des données correspondant aux paramètres influents du pneumatique identifié, et ayant au moins un dispositif de communication qui capture et qui transmet ces données aux serveurs, cette étape comprenant les étapes suivantes :
- une étape d'obtention des paramètres influents du pneumatique identifié, réalisée par les dispositifs de communication du système (100), et dans laquelle les paramètres influents obtenus comprennent des données correspondant à l'information historique et à l'information générale du pneumatique identifié ; et
- une étape de création d'une base d'apprentissage des états d'usure qui est introduite dans un modèle de prévision du nombre d'atterrissages résiduels correspondant à l'atteinte du seuil de retrait du pneumatique identifié ;
- une étape d'entrainement (204) du modèle de prévision pour prédire le nombre d'atterrissages résiduels correspondant à l'atteinte du seuil de retrait du pneumatique identifié, pendant laquelle une méthode d'apprentissage automatique prend en entrée les paramètres influents obtenus et les données de la base d'apprentissage de sorte que le processeur puisse récupérer des états d'usure connus correspondant au nombre d'atterrissages réalisés par le pneumatique identifié ;
- une étape de prévision (206) du nombre d'atterrissages résiduels (LPT restant) avant l'atteinte du seuil de retrait du pneumatique identifié, pendant laquelle le nombre d'atterrissages résiduels des pneumatiques identifiés est calculé à partir des données correspondant aux paramètres influents ; et
- une étape de comparaison (208) pendant laquelle le nombre d'atterrissages résiduels (LPT restant) avant l'atteinte du seuil de retrait du pneumatique identifié, ressorti du modèle de prévision, est comparé à une valeur du seuil de retrait du pneumatique identifié, de sorte que le système (100) crée un plan de maintenance pour le pneumatique identifié, **caractérisé en ce que** le procédé de prévision (200) comprend en outre une étape de simulation (400) des aéroports de destination pour l'avion identifié à partir des données historiques de vols, dans lequel l'étape de simulation (400) est effectuée par le biais d'une chaîne de Markov où chaque état représente un aéroport et chaque lien entre aéroport représente une probabilité d'atterrir dans un aéroport en partant d'un autre.

2. Le procédé de prévision (200) de la revendication 1, dans lequel les paramètres influents comprennent :
- l'information historique comprenant des données correspondant aux vols historiques de l'avion identifié ayant le pneumatique identifié monté sur celui-ci ; et
- l'information générale comprenant des données correspondant au pneumatique identifié, y compris sa position de montage sur l'avion identifié.

3. Le procédé de prévision (200) de la revendication 1 ou de la revendication 2, dans lequel le plan de maintenance créé par le système (100) pendant l'étape de comparaison (208) comprend:
- un projet d'entretien du pneumatique identifié où le nombre d'atterrissages résiduels (LPT restant) ressorti du modèle de prévision est supérieur à la valeur de seuil de retrait définie pour le pneumatique identifié ; et
- un projet d'inspection du pneumatique identifié où le nombre d'atterrissages résiduels (LPT restant) ressorti du modèle de prévision est égal ou inférieur à la valeur de seuil de retrait définie pour le pneumatique identifié.

4. Le procédé de prévision (200) de l'une quelconque des revendications 1 à 3, dans lequel une méthode d'apprentissage supervisé prend en entrée les paramètres influents obtenus et les données de la base d'apprentissage, de sorte que le processeur peut récupérer des états d'usure connus correspondant au nombre d'atterrissages réalisés par le pneumatique identifié pour construire le modèle de prévision.

5. Le procédé de prévision (200) de la revendication 4, dans lequel la méthode d'apprentissage supervisé comprend une méthode d'apprentissage supervisé de type GBR (« Gradient Boosting Regressor »).

6. Le procédé de prévision (200) de la revendication 4 ou de la revendication 5, dans lequel la base d'apprentissage inclut des images des profils d'usure correspondant aux états d'usure connus et des nombres d'atterrissages correspondants réalisés par le pneumatique identifié.

7. Le procédé de prévision (200) de l'une quelconque des revendications 1 à 6, dans lequel, pendant l'étape de prévision (206), le nombre d'atterrissages résiduels (LPT restant) des pneumatiques identifiés est calculé à partir des données correspondant aux paramètres influents des atterrissages futurs.

8. Le procédé de prévision (200) de l'une quelconque des revendications 1 à 7, dans lequel l'étape de simulation (400) est répétée plusieurs fois via une boucle de type Monte-Carlo (402) pour prédire une fin de vie du pneumatique identifié.
